# EUROPEAN PATENT APPLICATION

(11) **EP 4 234 621 A1**
(43) Date of publication of application: **30.08.2023**
(21) Application number: 21883263.2
(22) Date of filing: 20.10.2021
(51) Int. Cl.: C08K 5/00, C08K 5/12, C08K 5/1515, C08K 3/10, C08K 3/014, C08L 27/06

(54) **VINYL CHLORIDE RESIN COMPOSITION**

(30) Priority: 20.10.2020 KR 20200135961; 07.10.2021 KR 20210133019
(71) Applicant: Hanwha Solutions Corporation, Jung-gu Seoul 04541 (KR)
(72) Inventor: YOO, Myung-Ik, Daejeon 34128 (KR); KIM, Jaesong, Daejeon 34128 (KR)
(74) Representative: Berggren Oy
(86) International application number: PCT/KR2021/014763
(87) International publication number: WO 2022/086195

(57) **Abstract**

Provided is a vinyl chloride resin composition suitable for application to interior decorative products by having excellent processability, exhibiting less discoloration after processing, and excellent plasticizer migration resistance and thermal stability.

## Description

### [Field of the Invention]

### Cross-reference to Related Application

The present application is based on, and claims priority from, Korean Patent Application Nos. 10-2020-0135961 and 10-2021-0133019, filed on October 20, 2020 and October 7, 2021, respectively, the disclosures of which are hereby incorporated by reference herein in their entirety.

The present invention relates to a vinyl chloride resin composition that exhibits less discoloration and excellent thermal stability, and is environmentally friendly.

### [BACKGROUND OF THE INVENTION]

A vinyl chloride resin, which is an interpolymer containing a vinyl chloride homopolymer and vinyl chloride at a content of 50% or more, is one of five general-purpose thermoplastic plastic resins prepared by suspension polymerization and emulsion polymerization.

To impart functionality, the vinyl chloride resin is used after mixing with supplementary materials such as a plasticizer, a stabilizer, a filler, a blowing agent, etc. The plasticizer is added to improve processability by imparting flexibility to the vinyl chloride resin, and phthalate-based plasticizers, such as DEHP (Di-2-EthylHexyl Phthalate), DINP (Di-IsoNonyl Phthalate), DIDP (Di-Iso-Decyl Phthalate), BBP (Butyl Benzyl Phthalate), DBP (Di-n-butyl phthalate), etc., have been widely used.

Although the phthalate-based plasticizers have excellent plasticization efficiency, they are harmful to the human body, and therefore, their use has been recently regulated at home and abroad. Accordingly, terephthalate-based plasticizers, epoxide-based plasticizers, vegetable oil-based plasticizers, cyclohexane-based plasticizers or the like have been proposed as materials substituted for the phthalate-based plasticizers. Dioctyl terephthalate (DOTP) is a representative eco-friendly plasticizer, but DOTP plasticizer has problems such as good migration, poor weatherability against ultraviolet rays, and a poor gelling rate. Therefore, it is not suitable for use in interior decorative products that require excellent processability and good discoloration characteristics.

Accordingly, there is a demand for the development of a vinyl chloride resin composition exhibiting excellent physical properties while including an eco-friendly plasticizer.

### [SUMMARY OF THE INVENTION]

### [Technical Problem]

There are provided a vinyl chloride resin composition suitable for application to interior decorative products by having excellent processability, exhibiting less discoloration after processing, and excellent plasticizer migration resistance and thermal stability, and a molded article including the same.

### [Technical Solution]

To achieve the above objects, there is provided a vinyl chloride resin composition including:
a vinyl chloride resin;
a plasticizer; and
a thermal stabilizer,
wherein the plasticizer comprises a cyclohexane dicarboxylate-based compound represented by the following Chemical Formula 1 and an epoxidized vegetable oil, and
the thermal stabilizer comprises a Ba-Zn-based thermal stabilizer and a Na-Zn-based thermal stabilizer: 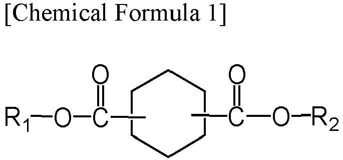
in Chemical Formula 1,
R₁ and R₂ are each independently a straight or branched-chain alkyl group having 4 to 12 carbon atoms.
There is also provided a molded article including the vinyl chloride resin composition.

### [Advantageous Effects]

A vinyl chloride resin composition according to the present invention has a high gelling rate to exhibit excellent processability, exhibits less discoloration after processing, and has excellent plasticizer migration resistance and thermal stability, thereby being suitably used in interior decorative products.

### [DETAILED DESCRIPTION OF THE EMBODIMENTS]

The terms used in this description are just for explaining exemplary embodiments and it is not intended to restrict the present invention. The singular expression may include the plural expression unless it is differently expressed contextually.

The present invention may be variously modified and have various forms, and specific embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

Hereinafter, the present invention will be described in more detail.

A vinyl chloride resin composition according to the present invention includes a vinyl chloride resin; a plasticizer including a cyclohexane dicarboxylate-based compound and an epoxidized vegetable oil; and a thermal stabilizer including a Ba-Zn-based thermal stabilizer and a Na-Zn-based thermal stabilizer. Due to this composition, the vinyl chloride resin composition according to the present invention is characterized by exhibiting excellent processability due to a high gelling rate, exhibiting excellent thermal stability, and having excellent plasticizer migration resistance and less discoloration after processing.

The vinyl chloride resin may be a homopolymer in which a vinyl chloride monomer is homopolymerized, or a copolymer in which a vinyl chloride monomer and a comonomer copolymerizable therewith are polymerized, and any one thereof or a mixture of the two may be used in preparing the vinyl chloride resin composition.

The comonomer copolymerizable with the vinyl chloride monomer may specifically include vinyl esters such as vinyl acetate, vinyl propionate, and vinyl stearate, etc.; vinyl ethers having an alkyl group such as methyl vinyl ether, ethyl vinyl ether, octyl vinyl ether, lauryl vinyl ether, etc.; vinylidene halides such as vinylidene chloride, etc.; unsaturated carboxylic acids, such as acrylic acid, methacrylic acid, fumaric acid, maleic acid, itaconic acid, maleic anhydride, itaconic anhydride, etc., and acid anhydrides thereof; unsaturated carboxylic acid esters such as methyl acrylate, ethyl acrylate, monomethyl maleate, dimethyl maleate, butylbenzyl maleate, etc.; aromatic vinyl compounds, such as styrene, α-methyl styrene, divinyl benzene, etc.; unsaturated nitriles such as acrylonitrile, methacrylonitrile, etc.; olefins such as ethylene, propylene, etc.; or crosslinkable monomers such as diallyl phthalate, etc., and any one thereof or a mixture of two or more thereof may be used. Of them, vinyl acetate may be more preferably included as the comonomer, in view of excellent compatibility with the vinyl chloride monomer and improving compatibility with the plasticizer constituting the resin composition after polymerization.

As described above, the vinyl chloride resin may be prepared by polymerizing the vinyl chloride monomer alone or by polymerizing the vinyl chloride monomer and the comonomer copolymerizable therewith. In this regard, the polymerization method is not particularly limited, and may be performed according to a common polymerization method known in the art to which the present invention pertains, such as suspension polymerization, bulk polymerization, emulsion polymerization, or seed emulsion polymerization, etc. Among them, a straight vinyl chloride resin prepared by suspension polymerization may be suitably used in the present invention.

The average particle size (D₅₀) of the vinyl chloride resin applicable in the present invention may be 10 µm to 400 µm, or 30 µm to 200 µm, more specifically, 50 µm to 100 µm. When the vinyl chloride resin has a particle size within the above range, it exhibits excellent dispersibility and may further improve the fluidity of the plasticized vinyl chloride resin composition.

When the average particle size (D₅₀) exceeds 400 µm, the dispersibility of the vinyl chloride resin particles themselves is low, and when the average particle size (D₅₀) is less than 10 µm, dispersibility may decrease due to aggregation between the vinyl chloride resin particles. On the other hand, in the present invention, the average particle size (D₅₀) of the vinyl chloride resin may be measured according to a common method of measuring a particle size distribution, such as optical microscopy, a light scattering measurement method, etc.

A degree of polymerization and a weight average molecular weight of the vinyl chloride resin may affect the compatibility with the components constituting the vinyl chloride resin composition, particularly, the plasticizer, and the processability of the vinyl chloride composition, which may be appropriately controlled through control of polymerization conditions during polymerization.

Specifically, the vinyl chloride resin may have a degree of polymerization of 500 to 3,000 or a weight average molecular weight (Mw) of 25,000 g/mol to 300,000 g/mol. When the vinyl chloride resin has the degree of polymerization and the weight average molecular weight within the above ranges, it may have excellent dispersibility and good compatibility with the plasticizer, and may improve processability of the vinyl chloride resin composition.

When the degree of polymerization of the vinyl chloride resin is less than 500 or the weight average molecular weight is less than 25,000 g/mol, it is apprehended that the processability and durability of a product after processing may deteriorate due to insufficient physical properties, and when the degree of polymerization is more than 3,000 or the weight average molecular weight is more than 300,000 g/mol, molding or processing may be difficult due to the high molecular weight. More specifically, the vinyl chloride resin may have a degree of polymerization of 700 or more and less than 1,700 or a weight average molecular weight (Mw) of 45,000 g/mol to 250,000 g/mol.

On the other hand, in the present invention, the weight average molecular weight (Mw) of the vinyl chloride resin is a converted value using polystyrene standards by gel permeation chromatography. In addition, the degree of polymerization of the vinyl chloride resin may be measured according to JIS K 6720-2.

The vinyl chloride resin composition of the present invention includes the cyclohexane dicarboxylate-based compound represented by Chemical Formula 1 and an epoxidized vegetable oil as the plasticizer. As described, when the two kinds of compounds are used in a mixture as the plasticizer, physical properties, such as gelling rate, weather resistance, discoloration resistance, and plasticizer migration resistance, etc., may be improved.

The cyclohexane dicarboxylate-based compound represented by Chemical Formula 1 may be represented by Chemical Formula 1-1 to Chemical Formula 1-3 depending on the positions of substituents:

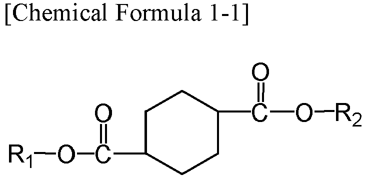

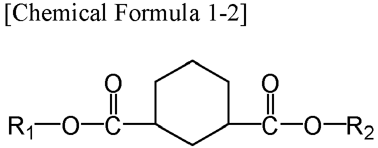

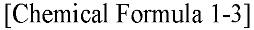

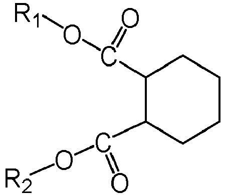

In Chemical Formulae 1-1 to 1-3, R₁ and R₂ are the same as defined in Chemical Formula 1.

Chemical Formula 1-1 is a cyclohexane-1,4-dicarboxylate-based compound, Chemical Formula 1-2 is a cyclohexane-1,3-dicarboxylate-based compound, and Chemical Formula 1-3 is a cyclohexane-1,2-dicarboxylate-based compound.

Further, in Chemical Formulae 1-1 to 1-3, R₁ and R₂ are each independently a butyl group, an isobutyl group, a pentyl group, a hexyl group, a heptyl group, a 2-ethylhexyl group, an octyl group, a nonyl group, an isononyl group, 2-propylheptyl group, a decyl group, or an isodecyl group. Preferably, R₁ and R₂ are each independently a butyl group, a 2-ethylhexyl group, or an isononyl group.

In one embodiment, the cyclohexane dicarboxylate-based compound may be one or more selected from the group consisting of di(2-ethylhexyl)cyclohexane-1,4-dicarboxylate, diisononylcyclohexane-1,2-dicarboxylate, di(2-ethylhexyl)cyclohexane-1,2-dicarboxylate, butyl(2-ethylhexyl)cyclohexane-1,4-dicarboxylate, and dibutylcyclohexane-1,4-dicarboxylate.

Preferably, the cyclohexane dicarboxylate-based compound may be di(2-ethylhexyl)cyclohexane-1,4-dicarboxylate (DEHCH) represented by the following Chemical Formula 1-4:

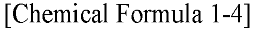

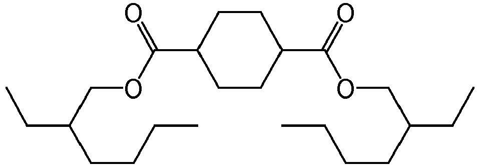

As compared to other cyclohexane dicarboxylate-based compounds, DEHCH has advantages of better plasticization efficiency and plasticizer migration resistance and a faster gelling rate. Therefore, when DEHCH is used as the cyclohexane dicarboxylate-based compound, it is preferable to further improve the overall physical properties of the vinyl chloride resin composition.

The cyclohexane dicarboxylate-based compound is preferably included in the range of 30 parts by weight or more, 40 parts by weight or more, or 50 parts by weight or more, and 90 parts by weight or less, 85 parts by weight or less, or 80 parts by weight or less with respect to the total 100 parts by weight of the plasticizer included in the vinyl chloride resin composition.

When the amount of the cyclohexane dicarboxylate-based compound exceeds 90 parts by weight with respect to 100 parts by weight of the plasticizer, the composition may have the excellent gelling rate, but there may be a problem in that the heating loss increases. Further, when the cyclohexane dicarboxylate-based compound is included in an excessively small amount of less than 10 parts by weight with respect to 100 parts by weight of the plasticizer, there may be problems in that the gelling rate decreases and the plasticization efficiency is low, and therefore, it is preferable to satisfy the above range.

The epoxidized vegetable oil is an epoxidized fatty acid alkyl ester prepared by epoxidizing a fatty acid alkyl ester. This epoxidized oil may exhibit effects of improving heat resistance, weather resistance, plasticization efficiency, and heating loss, and is excellent in economic efficiency.

Specifically, the epoxidized vegetable oil is obtained by introducing epoxy groups into unsaturated bonds of a vegetable fatty acid ester, and for example, one or more selected from the group consisting of epoxidized soybean oil, epoxidized castor oil, epoxidized linseed oil, epoxidized palm oil, epoxidized stearate, epoxidized oleate, epoxidized tall oil, and epoxidized linoleate may be used. Among them, epoxidized soybean oil may be preferable in terms of price and ease of domestic supply and demand.

The epoxidized vegetable oil may be used in an amount of 10 parts by weight or more, 15 parts by weight or more, or 20 parts by weight or more, and 70 parts by weight or less, 60 parts by weight or less, or 50 parts by weight or less with respect to the total 100 parts by weight of the plasticizer included in the vinyl chloride resin composition.

When the content of the epoxidized vegetable oil is less than 10 parts by weight with respect to 100 parts by weight of the plasticizer, heat resistance and weather resistance may deteriorate. On the contrary, when the content of the epoxidized vegetable oil exceeds 90 parts by weight, the content of the cyclohexane dicarboxylate-based compound is relatively reduced, resulting in problems such as a low gelling rate, high viscosity, and low migration resistance.

Meanwhile, the vinyl chloride resin composition of the present invention may further include an additional plasticizer compound, in addition to the above-described cyclohexane dicarboxylate-based compound and epoxidized vegetable oil. Examples of such additional plasticizer compounds may include terephthalate-based plasticizers, vegetable oils, and citrate-based plasticizers. The additional plasticizer compound is preferably included in an amount of 50 parts by weight or less or 30 parts by weight or less with respect to the total 100 parts by weight of the plasticizer included in the vinyl chloride resin composition so as not to impair the effect of the present invention.

In one preferred embodiment, the vinyl chloride resin composition of the present invention may not further include other plasticizers than the above-described cyclohexane dicarboxylate-based compound and epoxidized vegetable oil as plasticizers. In this regard, DEHCH may be used as the cyclohexane dicarboxylate-based compound, and epoxidized soybean oil may be used as the epoxidized vegetable oil.

The plasticizer including the cyclohexane dicarboxylate-based compound represented by Chemical Formula 1 and the epoxidized vegetable oil may be included in an amount of 20 parts by weight or more, 22 parts by weight or more, or 45 parts by weight or more, and 100 parts by weight or less, 80 parts by weight or less, or 75 parts by weight or less with respect to 100 parts by weight of the vinyl chloride resin. When the plasticizer is included in an amount of less than 30 parts by weight with respect to 100 parts by weight of the vinyl chloride resin, flexibility of the vinyl chloride resin composition may decrease, and when it exceeds 100 parts by weight, viscosity of the composition is low and flexibility is maximized, which is not suitable for products and makes it difficult to process.

The thermal stabilizer is added for the purpose of improving heat resistance of the vinyl chloride resin composition and preventing changes in physical properties during the period of use of the product. In the present invention, a Ba-Zn-based thermal stabilizer and a Na-Zn-based thermal stabilizer are included at the same time as the thermal stabilizer.

The Ba-Zn-based thermal stabilizer has excellent thermal stability and transparency, and thus it is used in the vinyl chloride resin composition for interior decoration such as decoration sheets. However, some Ba-Zn-based thermal stabilizers may change the chemical structure of the vinyl chloride resin or additives such as plasticizers, etc., when exposed to environments of excessive moisture or excessive sunlight after being constructed for interior decoration, and as a result, there is a disadvantage of discoloration.

Meanwhile, when the Na-Zn-based thermal stabilizer is used, the discoloration characteristics after construction are relatively good, but the thermal stability is low, and therefore, the product may be carbonized during calendering or extrusion processing.

Accordingly, in the present invention, the discoloration characteristics as well as the thermal stability of the vinyl chloride resin composition were greatly improved by using the Ba-Zn-based thermal stabilizer and the Na-Zn-based thermal stabilizer at the same time.

In order to secure the above-mentioned effects, the Ba-Zn-based thermal stabilizer is preferably included in an amount of 30 parts by weight or more, 40 parts by weight or more, or 50 parts by weight or more with respect to the total 100 parts by weight of the thermal stabilizer included in the vinyl chloride resin composition. When the content of the Ba-Zn-based thermal stabilizer is too low, it is difficult to secure sufficient heat resistance. Further, when the content of the Ba-Zn-based thermal stabilizer is too high, there may be a problem in molding articles due to the interaction between Ba and Zn components and processing equipment during processing of the vinyl chloride resin composition. For this reason, the Ba-Zn-based thermal stabilizer is preferably included in an amount of 80 parts by weight or less, or 70 parts by weight or less with respect to the total 100 parts by weight of the thermal stabilizer included in the vinyl chloride resin composition.

In addition, the Na-Zn-based thermal stabilizer is preferably included in the range of 20 parts by weight or more, or 30 parts by weight or more, and 60 parts by weight or less, or 50 parts by weight or less with respect to the total 100 parts by weight of the thermal stabilizer included in the vinyl chloride resin composition in order to improve the discoloration resistance of the vinyl chloride resin composition.

Meanwhile, the vinyl chloride resin composition of the present invention may further include other stabilizers commonly used according to desired physical properties, in addition to the above-described Ba-Zn-based thermal stabilizer and Na-Zn-based thermal stabilizer as thermal stabilizers. Other stabilizers may include Ca-Zn-based compounds; K-Zn-based compounds; organic tin-based compounds; metallic soap-based compounds such as Mg-stearate, Ca-stearate, Pb-stearate, Cd-stearate, or Ba-stearate, etc.; phenolic compounds; phosphoric acid ester-based compounds; or phosphite ester-based compounds; and the like. These other stabilizers are preferably used in an amount of 30 parts by weight or less, or 50 parts by weight or less with respect to the total 100 parts by weight of the thermal stabilizer included in the vinyl chloride resin composition.

The vinyl chloride resin composition of the present invention may not further include other stabilizers than the Ba-Zn-based thermal stabilizer and the Na-Zn-based thermal stabilizer. The vinyl chloride resin composition according to one preferred embodiment of the present invention may include 50 parts by weight to 70 parts by weight of the Ba-Zn-based thermal stabilizer and 30 parts by weight to 50 parts by weight of the Na-Zn-based thermal stabilizer with respect to 100 parts by weight of the thermal stabilizer included in the composition.

The thermal stabilizer including the Ba-Zn-based thermal stabilizer and the Na-Zn-based thermal stabilizer is preferably included in an amount of 0.1 part by weight or more, 0.5 parts by weight or more, 1 part by weight or more, or 2 parts by weight or more, and 10 parts by weight or less, 7 parts by weight or less, or 5 parts by weight or less with respect to 100 parts by weight of the vinyl chloride resin. When the content of the thermal stabilizer is less than 0.1 part by weight, the thermal stability of the vinyl chloride resin composition may not be secured, and when it exceeds 10 parts by weight, the processability of the composition deteriorates, causing problems during product production, such as sticking of the composition to equipment, etc. Therefore, it is preferable to satisfy the above range.

The vinyl chloride resin composition according to one preferred embodiment of the present invention may include 20 parts by weight to 100 parts by weight of the plasticizer and 0.1 part by weight to 10 parts by weight of the thermal stabilizer with respect to 100 parts by weight of the vinyl chloride resin.

The vinyl chloride resin composition according to one more preferred embodiment of the present invention may include 20 parts by weight to 75 parts by weight of the plasticizer and 2 parts by weight to 5 parts by weight of the thermal stabilizer with respect to 100 parts by weight of the vinyl chloride resin.

Meanwhile, the vinyl chloride resin composition may further include additives such as a UV stabilizer, a filler, a pigment, a processing aid, etc., in addition to the above-described thermal stabilizer. The additive may be appropriately selected according to physical properties to be improved in the vinyl chloride resin composition.

The UV stabilizer may be added to prevent damage by light, and stabilizers such as benzophenone-based, amine-based, and benzotriazole-based stabilizers, etc. may be used. Among them, a benzophenone-based stabilizer having excellent ability to absorb UV in the region of 280 nm to 340 nm, where the vinyl chloride resin is most vulnerable, may be appropriately used, and preferably, 2-hydroxy-4-octyloxybenzophenone may be used. The UV stabilizer may be used in an amount of 0.1 part by weight to 10 parts by weight, or 0.5 parts by weight to 5 parts by weight with respect to 100 parts by weight of the vinyl chloride resin.

The filler is used for the purpose of improving the productivity of the vinyl chloride resin composition and dry touch, etc., and includes any one or more selected from the group consisting of calcium carbonate, talc, titanium dioxide, kaolin, silica, alumina, magnesium hydroxide, and clay.

In the vinyl chloride resin composition according to the present invention, the filler may be preferably included in an amount of 10 parts by weight to 150 parts by weight, more preferably 50 parts by weight to 130 parts by weight with respect to 100 parts by weight of the vinyl chloride resin. When the filler is included in an amount of less than 50 parts by weight, there is a problem in that dimensional stability and economic efficiency are lowered, and when the filler is included in an amount of more than 130 parts by weight, there is a problem in that processability may deteriorate.

The pigment may be titanium dioxide, carbon black, or a cadmium-based pigment, etc. The pigment may be included in an amount of 0.1 part by weight to 20 parts by weight, or 1 part by weight to 15 parts by weight with respect to 100 parts by weight of the vinyl chloride resin. When the pigment is included in an amount of less than 0.1 part by weight, it is difficult to implement color, and when it exceeds 20 parts by weight, mechanical properties may deteriorate.

The processing aid may be added to promote gelling of the vinyl chloride resin composition, to allow uniform kneading, and to improve mechanical properties. As the processing aid, an acrylic processing aid, such as an alkyl acrylate, an alkyl methacrylate, or a copolymer thereof, may be used. Examples thereof may include, but are not limited to, n-butyl acrylate and methyl methacrylate copolymers, 2-ethylhexyl acrylate, methyl methacrylate, and butyl methacrylate copolymers. These processing aids may be used in an amount of 0.1 part by weight to 10 parts by weight, or 0.3 parts by weight to 5 parts by weight with respect to 100 parts by weight of the vinyl chloride resin.

The vinyl chloride resin composition according to the present invention may be prepared by a method generally known in the art using the above-described vinyl chloride resin, plasticizer, thermal stabilizer, and optionally, other additives, and the preparation method thereof is not particularly limited.

The vinyl chloride resin composition has a fast gelling rate to exhibit excellent processability, has excellent weather resistance and discoloration resistance to exhibit less discoloration due to light or moisture after processing, and has excellent thermal stability and plasticizer migration resistance. The vinyl chloride resin composition is also environmentally friendly because it includes no phthalate-based plasticizers.

Due to the excellent properties as described above, the vinyl chloride resin composition of the present invention may be suitably used in fields requiring heat resistance and discoloration resistance. Specifically, the vinyl chloride resin composition may be used as wallpaper, floor materials, decoration sheets, packaging materials, wire covering materials, automobile interior materials, films, artificial leathers, tarpaulins, hoses, or tubes, etc., and in particular, useful for interior decoration, such as wallpaper, floor materials, decoration sheets, etc.

Meanwhile, according to another aspect of the present invention, provided is a molded article including the vinyl chloride resin composition. The molded article may be manufactured from the vinyl chloride resin composition according to its use or by additionally adding additives such as a stabilizer, a filler, and/or a blowing agent, etc.

The molded article may be used for wallpaper, floor materials, decoration sheets, packaging materials, wire covering materials, automobile interior materials, films, artificial leathers, tarpaulins, hoses, or tubes, etc., and since the molded article has excellent thermal stability, weather resistance and discoloration resistance, it may be used particularly suitably in the interior decoration fields.

Hereinafter, the present invention will be described in more detail with reference to the following exemplary embodiments. However, the following exemplary embodiments are only for illustrating the present invention, and the scope of the present invention is not limited thereto.

### [Example]

### <Preparation of vinyl chloride resin composition>

### Example 1

With respect to 100 parts by weight of polyvinyl chloride (Hanwha Solution P-1000, degree of polymerization of 1000±50, Mw of 90,000, D50 of 50 µm to 100 µm), 17.5 parts by weight of di(2-ethylhexyl)cyclohexane-1,4-dicarboxylate (DEHCH), 5 parts by weight of epoxidized soybean oil (ESO, Songwon Industrial, E-700), 1.25 parts by weight of a Ba-Zn-based thermal stabilizer (BZ-150T, Songwon Industrial), and 1.25 parts by weight of a Na-Zn-based thermal stabilizer (LFX 910d-1, KD Chem) were added.

15 parts by weight of a white pigment (Dupont's R-902), 0.5 parts by weight of a UV stabilizer (Solvay's UV-531), and 0.3 parts by weight of a processing aid (DOW's K 125) were added thereto, and mixed using a mixer. Then, the mixture was kneaded using a roll mill to prepare a vinyl chloride resin composition.

### Examples 2 to 5

Each vinyl chloride resin composition was prepared in the same manner as in Example 1, except that the contents of DEHCH, ESO, Ba-Zn-based thermal stabilizer, and Na-Zn-based thermal stabilizer were as in Table 1 below.

### Comparative Example 1

A vinyl chloride resin composition was prepared in the same manner as in Example 1, except that 25 parts by weight of dipropyl heptyl phthalate (DPHP) was used as the plasticizer, instead of DEHCH and ESO, and 2 parts by weight of Ba-Zn-based thermal stabilizer (BZ-150T, Songwon Industrial) was used as the thermal stabilizer.

### Comparative Example 2

A vinyl chloride resin composition was prepared in the same manner as in Comparative Example 1, except that 25 parts by weight of DEHCH was used as the plasticizer.

### Comparative Example 3

A vinyl chloride resin composition was prepared in the same manner as in Comparative Example 2, except that 2 parts by weight of Na-Zn-based thermal stabilizer (LFX 910d-1, KD Chem) was used as the thermal stabilizer, instead of Ba-Zn-based thermal stabilizer.

**[Table 1]**

| | PVC | Plasticizer | | Thermal stabilizer | |
|---|---|---|---|---|---|
| | | DEHCH | ESO | Ba-Zn-based | Na-Zn-based |
| Example 1 | 100 | 17.5 | 5 | 1.25 | 1.25 |
| Example 2 | 100 | 35 | 10 | 2.5 | 2.5 |
| Example 3 | 100 | 59.2 | 16 | 2.4 | 2.4 |
| Example 4 | 100 | 27 | 20 | 1.5 | 1.5 |
| Example 5 | 100 | 43.2 | 32 | 2.4 | 2.4 |
| Comparative Example 1 | 100 | DPHP 25 | | 2 | - |
| Comparative Example 2 | 100 | 25 | - | 2 | - |
| Comparative Example 3 | 100 | 25 | - | - | 2 |

### <Experimental Example>

### (1) Indoor discoloration (△WI and △YI)

Roll mill processing (170°C, 3 minutes) and press processing (180°C, 8 minutes) were sequentially performed on the vinyl chloride resin composition to fabricate a 6 mm flat plate.

For the specimen thus fabricated, White Index (WI, whiteness) and Yellow index (YI, yellowness) were measured according to the ASTM E313 standard.

Then, the two specimens were stored in a place exposed to indoor sunlight and a shady place not exposed to sunlight for 6 months, respectively. Then, WI and YI were measured and compared with the initial measurement values to calculate the indoor discoloration.

### (2) Thermal stability

A sheet obtained by roll mill processing (170°C, 3 minutes) of the vinyl chloride resin composition was cut into a 15 mm × 480 mm strap shape and mounted in a Mathis oven at 190°C. The specimen mounted in the oven was set to be discharged out of the oven at a speed of 15 mm/5 minutes. The heat resistance time (minutes) was calculated through the length (non-carbonized length, mm) from the end of the test to the start of discoloration.

### (3) Gelling time

54 g of the vinyl chloride resin was put into a Brabender mixer at 95 °C and mixed at 30 rpm for 10 minutes. The gelling time of the resin was analyzed through the torque change for the processing time in the mixer.

### (4) Migration amount of plasticizer

Roll mill processing (170°C, 3 minutes) and press processing (180°C, 8 minutes) were sequentially performed on the vinyl chloride resin composition to fabricate a 2 mm flat plate. The flat plate thus fabricated was cut into a circular specimen having a diameter of about 4 cm.

Polypropylene oil absorbing sheets were placed on the upper and lower parts of the specimen, and left at 60°C for 7 days under a load of 5 kg to accelerate plasticizer migration. After completing the plasticizer migration test, the weight change rates of the specimen and oil sheets were measured.

The weight change rate of the specimen was calculated by [(weight change of specimen/weight of specimen before test) × 100], and the weight change rate of oil sheets was calculated by [(weight change of oil sheets/weight of oil sheets before test) × 100].

The weight loss of the specimen was equal to the weight increase of the oil sheets, and therefore, in this experiment, the plasticizer migration resistance was evaluated only with the weight change rate of the specimen.

**[Table 2]**

| | Indoor discoloration | | | | | |
|---|---|---|---|---|---|---|
| | Initial | | After 6 months-Shady place | | | |
| | WI₀ | YI₀ | WI | △WI | YI | △YI |
| Example 1 | 76.9 | 4.8 | 79.2 | +2.3 | 4.1 | -0.7 |
| Example 2 | 70.1 | 6.2 | 73.1 | +3.0 | 5.9 | -0.3 |
| Example 3 | 68.1 | 7.0 | 71.1 | +3.0 | 5.1 | -1.9 |
| Example 4 | 69.0 | 5.1 | 70.1 | +1.1 | 4.8 | -0.3 |
| Example 5 | 64.1 | 7.4 | 65.2 | +1.1 | 7.1 | -0.3 |
| Comparative Example 1 | 60.1 | 8.4 | 64.3 | +4.2 | 7.4 | -1.0 |
| Comparative Example 2 | 64.9 | 7.5 | 67.4 | +2.5 | 6.8 | -0.7 |
| Comparative Example 3 | 64.9 | 7.5 | 67.4 | +2.5 | 6.8 | -0.7 |

**[Table 3]**

| | Indoor discoloration | | | | | |
|---|---|---|---|---|---|---|
| | Initial | | After 6 months-Place exposed to light | | | |
| | WI₀ | YI₀ | WI | △WI | YI | △YI |
| Example 1 | 76.9 | 4.8 | 78.2 | +1.3 | 4.3 | -0.5 |
| Example 2 | 70.1 | 6.2 | 72.1 | +2.0 | 6.1 | -0.1 |
| Example 3 | 68.1 | 7.0 | +70.2 | 2.1 | 5.5 | -1.5 |
| Example 4 | 69.0 | 5.1 | +70.1 | 1.1 | 4.9 | -0.2 |
| Example 5 | 64.1 | 7.4 | +65.9 | 1.8 | 7.0 | -0.4 |
| Comparative Example 1 | 60.1 | 8.4 | +77.3 | 17.2 | 4.1 | -4.3 |
| Comparative Example 2 | 64.9 | 7.5 | +79.3 | 14.4 | 3.7 | -3.8 |
| Comparative Example 3 | 64.9 | 7.5 | +66.2 | 1.3 | 6.2 | -1.3 |

**[Table 4]**

| | Thermal stability (min) | Plasticizer migration (%) | Gelling time (sec) |
|---|---|---|---|
| Example 1 | 82.0 | 0.9 | 120 |
| Example 2 | 72.0 | 0.5 | 85 |
| Example 3 | 91.0 | 0.6 | 52 |
| Example 4 | 80.0 | 0.6 | 83 |
| Example 5 | 103.0 | 0.5 | 52 |
| Comparative Example 1 | 72.0 | 0.6 | 230 |
| Comparative Example 2 | 75.0 | 1.1 | 120 |
| Comparative Example 3 | 40.0 | 1.0 | 120 |

Referring to Tables 2 to 4, it was confirmed that the vinyl chloride resin compositions of Examples 1 to 5 exhibited excellent heat resistance, plasticizer migration resistance and gelling rate, and exhibited excellent discoloration resistance with significantly less change in whiteness and yellowness.

## Claims

1. A vinyl chloride resin composition comprising:
a vinyl chloride resin;
a plasticizer; and
a thermal stabilizer,
wherein the plasticizer comprises a cyclohexane dicarboxylate-based compound represented by the following Chemical Formula 1 and an epoxidized vegetable oil, and
the thermal stabilizer comprises a Ba-Zn-based thermal stabilizer and a Na-Zn-based thermal stabilizer: 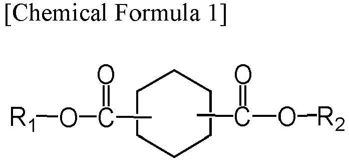
in Chemical Formula 1,
R₁ and R₂ are each independently a straight or branched-chain alkyl group having 4 to 12 carbon atoms.

2. The vinyl chloride resin composition of claim 1, wherein the cyclohexane dicarboxylate-based compound is comprised in an amount of 30 parts by weight to 90 parts by weight, and the epoxidized vegetable oil is comprised in an amount of 10 parts by weight to 70 parts by weight with respect to 100 parts by weight of the plasticizer.

3. The vinyl chloride resin composition of claim 1, wherein the Ba-Zn-based thermal stabilizer is comprised in an amount of 30 parts by weight to 90 parts by weight with respect to 100 parts by weight of the thermal stabilizer.

4. The vinyl chloride resin composition of claim 1, wherein the Ba-Zn-based thermal stabilizer is comprised in an amount of 50 parts by weight to 70 parts by weight and the Na-Zn-based thermal stabilizer is comprised in an amount of 30 parts by weight to 50 parts by weight with respect to 100 parts by weight of the thermal stabilizer.

5. The vinyl chloride resin composition of claim 1, wherein the cyclohexane dicarboxylate-based compound is one or more selected from the group consisting of di(2-ethylhexyl)cyclohexane-1,4-dicarboxylate, diisononylcyclohexane-1,2-dicarboxylate, di(2-ethylhexyl)cyclohexane-1,2-dicarboxylate, butyl(2-ethylhexyl)cyclohexane-1,4-dicarboxylate, and dibutylcyclohexane-1,4-dicarboxylate.

6. The vinyl chloride resin composition of claim 1, wherein the epoxidized vegetable oil is one or more selected from the group consisting of epoxidized soybean oil, epoxidized castor oil, epoxidized linseed oil, epoxidized palm oil, epoxidized stearate, epoxidized oleate, epoxidized tall oil, and epoxidized linoleate.

7. The vinyl chloride resin composition of claim 1, wherein the vinyl chloride resin has a degree of polymerization of 500 to 3,000, or a weight average molecular weight of 25,000 g/mol to 300,000 g/mol.

8. The vinyl chloride resin composition of claim 1, wherein the plasticizer is comprised in an amount of 20 parts by weight to 100 parts by weight with respect to 100 parts by weight of the vinyl chloride resin.

9. The vinyl chloride resin composition of claim 1, wherein the thermal stabilizer is comprised in an amount of 0.1 part by weight to 10 parts by weight with respect to 100 parts by weight of the vinyl chloride resin.

10. The vinyl chloride resin composition of claim 1, comprising one or more additives selected from the group consisting of a UV stabilizer, a filler, a pigment, and a processing aid.

11. A molded article comprising the vinyl chloride resin composition of claim 1.

12. The molded article of claim 11, wherein the molded article is a wallpaper, a floor material, a decoration sheet, a packaging material, a wire covering material, an automobile interior material, a film, an artificial leather, a tarpaulin, a hose, or a tube.
